# EUROPEAN PATENT APPLICATION

(11) **EP 2 966 925 A2**
(43) Date of publication of application: **13.01.2016**
(21) Application number: 15175362.1
(22) Date of filing: 03.07.2015
(51) Int. Cl.: H04W 72/12

(54) **DEVICE AND METHOD OF HANDLING DEVICE-TO-DEVICE COMMUNICATION**

(30) Priority: 08.07.2014 US 201462022176 P; 30.06.2015 US 201514754724
(71) Applicant: HTC Corporation, Taoyuan City 330 (TW)
(72) Inventor: Wu, Chih-Hsiang, 330 Taoyuan City (TW)
(74) Representative: Ljungberg, Robert

(57) **Abstract**

A communication device for handling a device-to-device (D2D) communication comprises a storage unit for storing instructions and a processing means coupled to the storage unit. The processing means is configured to execute the instructions stored in the storage unit. The instructions comprises determining whether to transmit a Cell Radio Network Temporary Identifier (C-RNTI) or data of an uplink common control channel (UL-CCCH) to a network according to a priority of the C-RNTI or the data of the UL-CCCH; determining whether to transmit a device-to-network (D2N) buffer status report (BSR) to the network according to a priority of the D2N BSR; determining whether to transmit a D2N power headroom report (PHR) to the network according to a priority of the D2N PHR; and determining whether to transmit a D2D BSR to the network according to a priority of the D2D BSR.

## Description

### Background of the Invention

### 1. Field of the Invention

The present invention is related to a communication device and a method used in a wireless communication system, and more particularly, to a communication device and a method of handling a device-to-device communication in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

Device-to-device (D2D) communication may be realized, after an initialization (e.g., connection establishment and/or peer discovery) is performed (e.g., assisted by an eNB). Then, two UEs may communicate (e.g., transmitting and/or receiving packets) with each other (e.g., directly) according to the D2D communication, and the eNB may not need to forward the packets transmitted between the UEs. According to the D2D communication, the UEs may communicate with each other via UL resources (e.g., UL subframes configured by the eNB). In general, the D2D communication may also be seen as a D2D service (i.e., proximity-based service (ProSe)). The D2D service can be a ProSe direct discovery or a ProSe direct communication. In addition, a D2D subframe, D2D transmission, D2D communication and D2D discovery can be termed as a sidelink subframe, sidelink transmission, sidelink communication and sidelink discovery, respectively.

However, a transmission of medium access control (MAC) control elements (e.g., a D2D buffer status report (BSR)) is a problem to be solved in the D2D communication. In detail, a UE may intend to transmit data and MAC control elements in a transmission to an eNB, and the UE is granted by the eNB a transport block for the transmission. If a size of the transport block is not sufficient for transmitting all of the data and the MAC control elements, the following situations may happen. The data is transmitted incompletely, the MAC control elements are transmitted incompletely, or both the data and the MAC control elements are transmitted incompletely. The UE cannot operate regularly, if any of the above situations happen.

On the other hand, no transmission (e.g., UL shared channel (UL-SCH)) can be performed in a subframe, if the subframe is within a measurement gap. Similarly, no reception (e.g., downlink shared channel (DL-SCH)) can be performed in a subframe, if the subframe is within the measurement gap. The measurement gap causes a problem to a transmission of D2D data. A UE configured with a measurement gap configuration is not allowed to transmit/receive D2D data or a scheduling assignment in a subframe within the measurement gap. The transmission or reception of the D2D data is thus delayed. The problem may be severe, when the D2D data includes emergency information in public safety scenarios.

Thus, it is important to solve the abovementioned problems.

### Summary of the Invention

The present invention therefore provides a communication device and a method for handling a device-to-device communication to solve the abovementioned problem.

A communication device for handling a device-to-device (D2D) communication comprises a storage unit for storing instructions and a processing means coupled to the storage unit. The processing means is configured to execute the instructions stored in the storage unit. The instructions comprises determining whether to transmit a Cell Radio Network Temporary Identifier (C-RNTI) or data of an uplink common control channel (UL-CCCH) to a network according to a priority of the C-RNTI or the data of the UL-CCCH; determining whether to transmit a device-to-network (D2N) buffer status report (BSR) to the network according to a priority of the D2N BSR, wherein the priority of the C-RNTI or the data of the UL-CCCH is higher than the priority of the D2N BSR; determining whether to transmit a D2N power headroom report (PHR) to the network according to a priority of the D2N PHR, wherein the priority of the D2N BSR is higher than the priority of the D2N PHR; and determining whether to transmit a D2D BSR to the network according to a priority of the D2D BSR, wherein the priority of the D2N PHR is higher than the priority of the D2D BSR.

A communication device for handling a device-to-device (D2D) communication comprises a storage unit for storing instructions and a processing means coupled to the storage unit. The processing means is configured to execute the instructions stored in the storage unit. The instructions comprises receiving a measurement gap configuration for configuring a measurement gap to the communication device; and transmitting or receiving a D2D signal in a subframe in the measurement gap.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

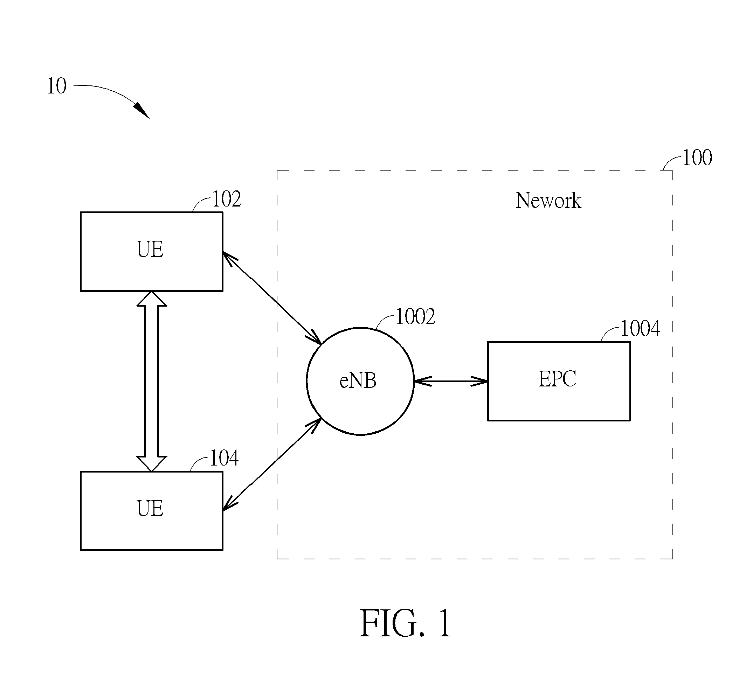

Fig. 1 is a schematic diagram of a wireless communication system 10 according to an example of the present invention. The wireless communication system 10 is briefly composed of a network 100 and user equipments (UEs) 102 and 104. In Fig. 1, the network 100 and the UEs 102 and 104 are simply utilized for illustrating the structure of the wireless communication system 10. A UE may communicate with the network 100 according to a device-to-cellular (D2C) communication (i.e., device-to-network (D2N) communication) defined in a communication standard, e.g., the 3rd Generation Partnership Project (3GPP) standard. Practically, the network 100 can be a universal terrestrial radio access network (UTRAN) comprising at least one Node-B (NB) in a universal mobile telecommunications system (UMTS). In another example, the network 100 can be an evolved UTRAN (E-UTRAN) comprising at least one evolved NB (eNB) and/or at least one relay in a long term evolution (LTE) system, a LTE-Advanced (LTE-A) system or an evolution of the LTE-A system. As an example, the network 100 includes an eNB 1002 connected to an evolved packet core (EPC) 1004 in Fig .1.

Furthermore, the network 100 can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network 100 receives information transmitted by a UE (e.g., the UE 102 and/or the UE 104), the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network.

A UE (e.g., the UE 102 and/or the UE 104) can be a low cost device (e.g., machine type communication (MTC) device), a device-to-device (D2D) device, a mobile phone, a laptop, a tablet computer, an electronic book, a portable computer system, or combination thereof. In addition, for the D2C communication, the network 100 and the UE can be seen as a transmitter or a receiver according to direction (i.e., transmission direction), e.g., for an uplink (UL), the UE is the transmitter and the network 100 is the receiver, and for a downlink (DL), the network 100 is the transmitter and the UE is the receiver.

In addition, the UEs 102 and 104 may communicate with each other directly, after an initialization (e.g., connection establishment and/or peer discovery) is performed. For example, the initialization may be assisted by the network 100. That is, the UEs 102 and 104 may communicate (e.g., transmit and/or receive signals/packets) with each other according to a D2D communication defined in a communication standard, e.g., 3GPP standard. The UEs 102 and 104 may communicate with each other via UL resources (e.g., UL subframes or UL carriers) determined according to frequency-division duplexing (FDD) configuration and/or time-division duplexing (TDD) configurations. In one example, he UE 102 may communicate with the UE 104 in an UL subframe and with the network 100 in another subframe. In another example, the UE 102 may communicate with the UE 104 and the network 100 simultaneously, i.e., both the D2D communication and the D2C communication are realized at the same time.

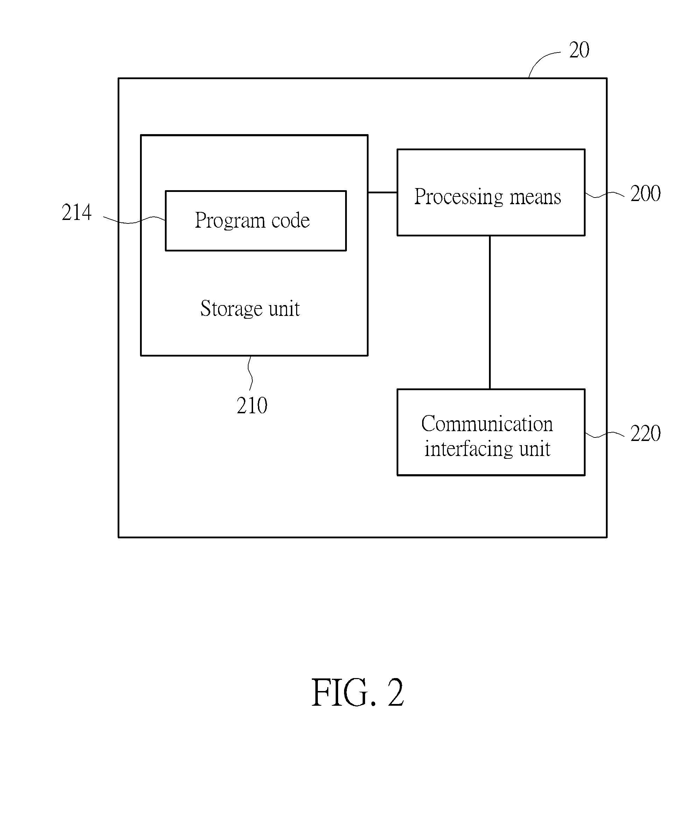

Fig. 2 is a schematic diagram of a communication device 20 according to an example of the present invention. The communication device 20 may be used for realizing the network 100 (e.g., the eNB 1002 and/or the EPC 1004), the UE 102 and/or the UE 104 shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

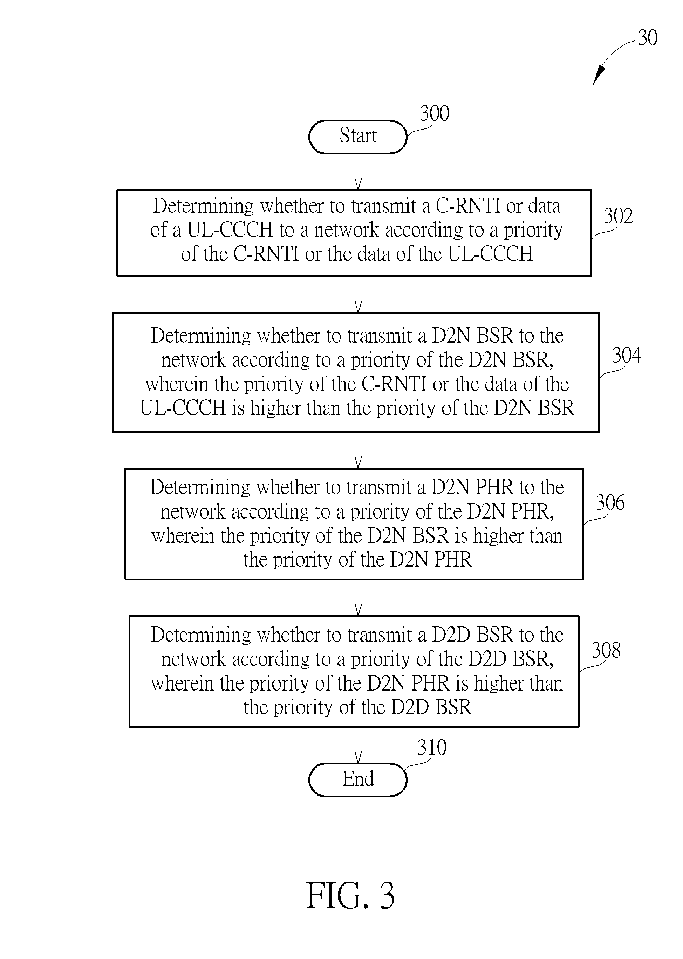

Fig. 3 is a flowchart of a process 30 according to an example of the present invention. The process 30 may be utilized in the UE 102 (or the UE 104) shown in Fig. 1, to handle a D2D communication. The process 30 may be compiled into the program code 214 and includes the following steps:
Step 300: Start.
Step 302: Determining whether to transmit a Cell Radio Network Temporary Identifier (C-RNTI) or data of a UL common control channel (UL-CCCH) to a network according to a priority of the C-RNTI or the data of the UL-CCCH.
Step 304: Determining whether to transmit a D2N buffer status report (BSR) to the network according to a priority of the D2N BSR, wherein the priority of the C-RNTI or the data of the UL-CCCH is higher than the priority of the D2N BSR.
Step 306: Determining whether to transmit a D2N power headroom report (PHR) to the network according to a priority of the D2N PHR, wherein the priority of the D2N BSR is higher than the priority of the D2N PHR.
Step 308: Determining whether to transmit a D2D BSR to the network according to a priority of the D2D BSR, wherein the priority of the D2N PHR is higher than the priority of the D2D BSR.
Step 310: End.

According to the process 30, the UE 102 determines whether to transmit a C-RNTI or data of a UL-CCCH to a network (e.g., the network 100) according to a priority of the C-RNTI or the data of the UL-CCCH. The UE 102 determines whether to transmit a D2N BSR to the network 100 according to a priority of the D2N BSR, wherein the priority of the C-RNTI or the data of the UL-CCCH is higher than the priority of the D2N BSR. The UE 102 determines whether to transmit a D2N PHR to the network 100 according to a priority of the D2N PHR, wherein the priority of the D2N BSR is higher than the priority of the D2N PHR. The UE 102 determines whether to transmit a D2D BSR to the network 100 according to a priority of the D2D BSR, wherein the priority of the D2N PHR is higher than the priority of the D2D BSR. That is, the priorities of the data and the medium access control (MAC) control elements from high to low are the priority of the C-RNTI or the data of the UL-CCCH, the priority of the D2N BSR, the priority of the D2N PHR, and the priority of the D2D BSR. The UE 102 processes (e.g., transmits) the data and the MAC control elements according to the specified priorities. Thus, the data and the MAC control elements can be processed properly, e.g., information related to the D2N communication which is more important will not be delayed or only be slightly delayed. Operations of the D2N communication are not impacted by the D2D communication while the UE 102 is performing the D2D communication. As a result, the UEs 102 and 104 and the network 100 can operate regularly.

In addition, the UE 102 may not have enough resource for transmitting a specific MAC control element, the UE 102 may not transmit the MAC control element according to the present invention. In one example, the D2N BSR in the process 30 may not be transmitted, if a resource determined according to the priority of the D2N BSR is not sufficient for transmitting the D2N BSR. In one example, the D2N PHR in the process 30 may not be transmitted, if a resource determined according to the priority of the D2N PHR is not sufficient for transmitting the D2N PHR. In one example, the D2D BSR in the process 30 may not be transmitted, if a resource determined according to the priority of the D2D BSR is not sufficient for transmitting the D2D BSR. It should be noted that whether a resource for transmitting a MAC control element (e.g., D2N BSR) is sufficient or not, the MAC control element may not be transmitted if the UE 102 is not triggered (or scheduled) to transmit the MAC control element. That is, one or more of the steps in the process 30 may be stopped (or skipped), if the UE 102 does not need to transmit the MAC control element.

Resources where the data and the MAC control elements in the process 30 are transmitted are not limited. In one example, a set of the C-RNTI or the data of the UL-CCCH, the D2N BSR, the D2N PHR and the D2D BSR may be transmitted in a transport block. In addition, a set of the C-RNTI or the data of the UL-CCCH, the D2N BSR, the D2N PHR and the D2D BSR may be transmitted in a plurality of transport blocks. For example, the C-RNTI or the data of the UL-CCCH may be transmitted in a first transport block and the D2N BSR may be transmitted in a second transport block, while the D2N PHR and the D2D BSR are determined not to be transmitted (e.g., not triggered or no sufficient resource). In another example, the C-RNTI or the data of the UL-CCCH and the D2N BSR may be transmitted in a first transport block and the D2N PHR may be transmitted in a second transport block, while the D2D BSR is determined not to be transmitted (e.g., not triggered or no sufficient resource). In another example, the C-RNTI or the data of the UL-CCCH, the D2N BSR and the D2N PHR may be transmitted in a same transport block, while the D2D BSR is determined not to be transmitted (e.g., not triggered or no sufficient resource). Various examples can be obtained by those skilled in the art according to the above illustrations, and are not narrated herein.

On the other hand, a set of the C-RNTI or the data of the UL-CCCH, the D2N BSR, the D2N PHR and the D2D BSR may be transmitted on a carrier frequency. In addition, a set of the C-RNTI or the data of the UL-CCCH, the D2N BSR, the D2N PHR and the D2D BSR may be transmitted on a plurality of carrier frequencies. For example, the C-RNTI or the data of the UL-CCCH may be transmitted on a first carrier frequency and the D2N BSR may be transmitted on a second carrier frequency, while the D2N PHR and the D2D BSR are determined not to be transmitted (e.g., not triggered or no sufficient resource). In another example, the C-RNTI or the data of the UL-CCCH and the D2N BSR may be transmitted on a first carrier frequency and the D2D BSR may be transmitted on a second carrier frequency, while the D2N PHR is not triggered for a transmission. In another example, the C-RNTI or the data of the UL-CCCH, the D2N PHR, and the D2D BSR may be transmitted on a same carrier frequency, while the D2N BSR is not triggered for a transmission. Various examples can be obtained by those skilled in the art according to the above illustrations, and are not narrated herein.

On the other hand, a set of the C-RNTI or the data of the UL-CCCH, the D2N BSR, the D2N PHR and the D2D BSR may be transmitted to a base station of the network. In addition, a set of the C-RNTI or the data of the UL-CCCH, the D2N BSR, the D2N PHR and the D2D BSR may be transmitted to a plurality of base stations of the network. For example, the D2N PHR may be transmitted to a first base station and the D2D BSR may be transmitted to a second base station, while the C-RNTI or the data of the UL-CCCH and the D2N BSR are not needed for transmissions. In another example, the C-RNTI or the data of the UL-CCCH and the D2N BSR may be transmitted to a first base station and the D2N PHR may be transmitted to a second base station, while the D2D BSR is determined not to be transmitted (e.g., not triggered or no sufficient resource). In another example, the C-RNTI or the data of the UL-CCCH, the D2N PHR and the D2D BSR may be transmitted to a same base station, while the D2N BSR is not triggered for a transmission. Various examples can be obtained by those skilled in the art according to the above illustrations, and are not narrated herein.

It should be noted that the examples regarding to the transport block, the carrier frequency and/or the base station mentioned or implied above can be combined to obtain variations of the examples according to the skill in the art.

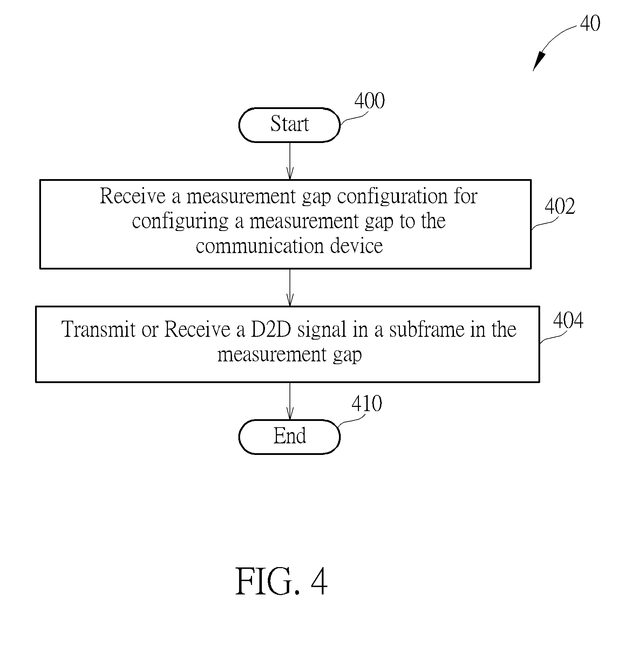

Fig. 4 is a flowchart of a process 40 according to an example of the present invention. The process 40 may be utilized in the UE 102 (or the UE 104) shown in Fig. 1, to handle a D2D communication. The process 40 may be compiled into the program code 214 and includes the following steps:
Step 400: Start.
Step 402: Receive a measurement gap configuration for configuring a measurement gap to the communication device.
Step 404: Transmit or receive a D2D signal in a subframe in the measurement gap.
Step 406: End.

According to the process 40, the UE 102 receives a measurement gap configuration for configuring a measurement gap to the communication device. Then, the UE 102 still transmits or receives a D2D signal in a subframe in the measurement gap. That is, a transmission or reception of the D2D signal is not stopped by the measurement gap. Thus, delay of the transmission or reception of the D2D signal can be avoided.

In addition, the D2D signal in the process 40 may be transmitted or received according to a priority of the D2D signal rather than being transmitted or received arbitrarily. For example, the UE 102 may transmit or receive the D2D signal in the subframe during the measurement gap, if the priority of the D2D signal is greater than a predetermined value. Otherwise, the UE 102 may stop to transmit or receive the D2D signal in the subframe during the measurement gap.

In one example, the D2D signal may include D2D data, a scheduling assignment, a physical D2D synchronization channel (PD2DSCH) and/or a primary D2D Synchronization Signal (PD2DSS). That is, the UE 102 may transmit or receive the D2D signal in the subframe during the measurement gap, if the D2D signal includes any of the abovementioned signal. In one example, the D2D signal may include emergency information. In one example, the D2D signal may include control information. That is, the UE 102 may transmit or receive the D2D signal in the subframe during the measurement gap, if the D2D signal includes any of the abovementioned signal the emergency information and/or the control information.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a communication device and a method for handling a D2D communication. The priorities of data and MAC control elements related to the D2D communication are specified. Thus, the data and the MAC control elements can be processed properly, and the communication device can operate regularly. In addition, a measurement gap is properly defined for the D2D communication. Thus, transmission or reception of a D2D signal is not delayed.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (20) for handling a device-to-device, D2D, communication, comprising:
a storage unit (210) for storing instructions of:
determining whether to transmit a Cell Radio Network Temporary Identifier, C-RNTI,
or data of an uplink common control channel, UL-CCCH, to a network according to a priority of the C-RNTI or the data of the UL-CCCH;
determining whether to transmit a device-to-network, D2N, buffer status report, BSR,
to the network according to a priority of the D2N BSR, wherein the priority of the C-RNTI or the data of the UL-CCCH is higher than the priority of the D2N BSR;
determining whether to transmit a D2N power headroom report, PHR, to the network according to a priority of the D2N PHR, wherein the priority of the D2N BSR is higher than the priority of the D2N PHR; and
determining whether to transmit a D2D BSR to the network according to a priority of the D2D BSR, wherein the priority of the D2N PHR is higher than the priority of the D2D BSR; and
a processing means (200), coupled to the storage unit (210), configured to execute the instructions stored in the storage unit (210).

2. The communication device (20) of claim 1, wherein the D2N BSR is not transmitted, if a resource determined according to the priority of the D2N BSR is not sufficient for transmitting the D2N BSR.

3. The communication device (20) of claim 1, wherein the D2N PHR is not transmitted, if a resource determined according to the priority of the D2N PHR is not sufficient for transmitting the D2N PHR.

4. The communication device (20) of claim 1, wherein the D2D BSR is not transmitted, if a resource determined according to the priority of the D2D BSR is not sufficient for transmitting the D2D BSR.

5. The communication device (20) of claim 1, wherein a set of the C-RNTI or the data of the UL-CCCH, the D2N BSR, the D2N PHR and the D2D BSR are transmitted in a transport block.

6. The communication device (20) of claim 1, wherein a set of the C-RNTI or the data of the UL-CCCH, the D2N BSR, the D2N PHR and the D2D BSR are transmitted in a plurality of transport blocks.

7. The communication device (20) of claim 1, wherein a set of the C-RNTI or the data of the UL-CCCH, the D2N BSR, the D2N PHR and the D2D BSR are transmitted on a carrier frequency.

8. The communication device (20) of claim 1, wherein a set of the C-RNTI or the data of the UL-CCCH, the D2N BSR, the D2N PHR and the D2D BSR are transmitted on a plurality of carrier frequencies.

9. The communication device (20) of claim 1, wherein a set of the C-RNTI or the data of the UL-CCCH, the D2N BSR, the D2N PHR and the D2D BSR are transmitted to a base station of the network.

10. The communication device (20) of claim 1, wherein a set of the C-RNTI or the data of the UL-CCCH, the D2N BSR, the D2N PHR and the D2D BSR are transmitted to a plurality of base stations of the network.

11. A communication device (20) for handling a device-to-device, D2D, communication, comprising:
a storage unit (210) for storing instructions of:
receiving a measurement gap configuration for configuring a measurement gap to the communication device (20); and
transmitting or receiving a D2D signal in a subframe in the measurement gap; and
a processing means (200), coupled to the storage unit (210), configured to execute the instructions stored in the storage unit (210).

12. The communication device (20) of claim 11, wherein the D2D signal is transmitted or received according to a priority of the D2D signal.

13. The communication device (20) of claim 11, wherein the D2D signal comprises D2D data, a scheduling assignment, a physical D2D synchronization channel, PD2DSCH, and/or a primary D2D Synchronization Signal, PD2DSS.

14. The communication device (20) of claim 11, wherein the D2D signal comprises emergency information.

15. The communication device (20) of claim 11, wherein the D2D signal comprises control information.
